# EUROPEAN PATENT APPLICATION

(11) **EP 2 916 224 A1**
(43) Date of publication of application: **09.09.2015**
(21) Application number: 14158330.2
(22) Date of filing: 07.03.2014
(51) Int. Cl.: G06F 9/50

(54) **Virtual store management based on render services**

(71) Applicant: Crytek GmbH, 60322 Frankfurt am Main (DE)
(72) Inventor: Yerli, Faruk, 60322 Frankfurt/Main (DE); Taube, Alex, 61440 Oberursel (DE); Peters, Benjamin, 60332 Frankfurt/Main (DE)
(74) Representative: Schmidt, Steffen

(57) **Abstract**

The invention relates to a computer-implemented method for providing a virtual store in an interactive simulation environment based on a network-based render service, the method comprising executing one or more applications on one or more processing devices, each processing device providing a render service configured to render output of at least one application executed on the processing device, providing data from one or more databases, said data to be processed by the one or more applications, wherein the one or more applications are configured to process the data, to assemble at least some of the processed data in a virtual store, and to provide as output an interactive representation of the virtual store, receiving an access request from a client of one or more clients, the access request identifying one of the one or more applications, establishing a direct connection between the processing device executing the identified application and the client, providing, by the render service of the processing device, the rendered output of the identified application to the client via the direct connection as an interactive simulation environment including the interactive representation of the virtual store, and receiving, by the application, input data from the client via the direct connection indicative of an update of the virtual store.

## Description

### TECHNICAL FIELD

The present disclosure generally relates to virtual store management based on render services and to a network-based system and a method for providing a virtual store in an interactive simulation environment based on network-based render services. In particular, the present disclosure may relate to systems and methods providing render services used to manage a virtual store.

### BACKGROUND

Interactive visualization of complex data, such as massive data or big data related to multidimensional simulation results or describing complex business processes and data, remains a difficult task, since the handling of complex data could be restricted by processing resources and proprietary protocols and the visualization of the results could be limited by the locally available processing and rendering hardware. One example of such complex data are data related to products that are delivered to a customer, e.g. a retail store chain, or stocks available in warehouses, in combination with data such as further listings and products. In current approaches, users typically have to open several applications in parallel in order to access various data sets of the complex data stored in several databases in order to provide management of store-related data, such as analysis and evaluation of the data, further simulation of processes, and others. Also, complex data will not be typically displayed in one uniform application, but requires separate applications targeting respective areas of information and processing. Hence, a user will have to cross-reference the complex data manually or use further applications to transfer the data between applications. However, transferring of data between applications involves error-prone steps of exporting and importing data and has to be manually repeated after each update of the processed data.

Therefore, it is an object of the present invention to provide an interactive, flexible and unified approach for processing of complex data.

### SUMMARY

The problem is solved by a network-based system and a method providing a render service as defined in the independent claims. Furthermore, a computer-readable medium and a processing device are defined. Preferred embodiments are defined in the corresponding dependent claims.

A first aspect of the present disclosure relates to a computer-implemented method for providing a virtual store in an interactive simulation environment based on a network-based render service, the method comprising executing one or more applications on one or more processing devices, each processing device providing a render service configured to render output of at least one application executed on the processing device, providing data from one or more databases, said data to be processed by the one or more applications, wherein the one or more applications are configured to process the data, to assemble at least some of the processed data in a virtual store, and to provide as output an interactive representation of the virtual store, receiving an access request from a client of one or more clients, the access request identifying one of the one or more applications, establishing a direct connection between the processing device executing the identified application and the client, providing, by the render service of the processing device, the rendered output of the identified application to the client via the direct connection as an interactive simulation environment including the interactive representation of the virtual store, and receiving, by the application, input data from the client via the direct connection indicative of an update of the virtual store.

According to yet another aspect, a network-based system is provided, comprising one or more processing devices configured to execute one or more applications, each processing device providing a render service configured to render output of at least one application executed on the processing device, one or more databases coupled to the one or more processing devices and configured to provide data to be processed by the one or more applications, wherein the one or more applications are configured to process the data, to assemble at least some of the processed data in a virtual store, and to provide as output an interactive representation of the virtual store, and a master server configured to receive an access request from a client of one or more clients, the access request identifying one of the one or more applications and to establish a direct connection between a processing device executing the identified application and the client, wherein the rendered output of the identified application is provided to the client via the direct connection as an interactive simulation environment including the interactive representation of the virtual store, wherein the application is configured to receive input data from the client via the direct connection indicative of an update of the virtual store.

The approach allows a user, such as a consumer products manufacturing company, to display and manipulate their data in an intuitive and dynamic way, not possible with current applications. A user operating a client device can view so-called listings of products that are delivered to a customer, such as a retail store chain, next to the stocks available in warehouses, or next to other virtual listings such as optimal store listings, innovative products, new products or promotional products. In addition to viewing such product listings the user can change the listings, create new promotion campaigns, and/or delete products to such listings, by providing respective input data from the client device via the direct connection to the application. All changes in the listings and any other parameters (e.g. adding a product) may also change further business-related or administrative-related parameters, such as KPIs (Key Performance Indicators) accordingly. Therefore, the approach optimizes a company's performance with regard to an optimal placement of products and supply of products, which are mapped onto a real retail store.

Preferably, the network-based system may comprise one or more processing devices configured to execute one or more applications, each processing device providing a render service configured to render output of at least one application executed on the processing device, and one or more databases coupled to the one or more processing devices, configured to provide data to be processed by the one or more applications. The network-based system further comprises a master server configured to manage one or more clients, to receive an access request from one of the one or more clients, the access request identifying one of the one or more applications, to forward the client to the processing device executing the identified application, to establish a direct connection between the processing device and the client, wherein the rendered output of the identified application is provided to the client via the direct connection, and to re-direct the client back to the master server if the client quits the application.

The system may be set-up to provide a structure of dedicated processing devices, which can be accessed by individual clients in order to perform the desired tasks on the complex data, wherein the tasks are reflected by the plurality of applications executed on the processing devices. The output of an application accessed by a client on a processing device is handled by the render service of the processing device, such that the rendered output is provided via the direct connections to the client.

The central master server manages the clients and assigns the clients to the processing devices providing the requested applications, which directly access the required data provided by connected databases. Hence, the processing devices need not to have resources for storing and managing the complex data, such as massive storage devices and others. The master server may be a controlling unit for all connected clients and may control the whole environment of the system, including the processing devices and the databases.

The processing devices, which could also be referred to as render servers throughout the description, can be controlled by the master server and may receive the client connections from the master server in response to an access request. As soon as a processing device accepts a forwarded client, a direct connection between the processing device and the client is established. The direct connection may be associated with the application and the render service such that the render service may directly feed the rendered output of the application into the direct connection and the application may trigger the direct connection for any input data received from the client. By establishing direct connections between the processing devices and the client devices on demand, the approach enables a fast and efficient communication between the processing device and respective client devices, including direct transmission of the rendered output.

The clients may access the services provided by the system by connecting to the master server and individually requesting access to applications providing the desired processing and handling of the data stored in the one or more databases. After leaving the application, the client may be redirected back to the master server and may continue to request the same or another service as required. This provides for an efficient access to individual services provided by the applications, since the clients remain registered and connected to the master server and need not to establish a new connection with the master server.

The processing devices and the master server may be implemented as hardware devices including processing units and memory or storage means, which may be configured to communicate with each other via a network. Furthermore, the databases may be provided as hardware devices including a processing unit and storage means dedicated to store, manage and retrieve massive data. For example, the one or more databases may be capable of storing big data related to experimental results or business data, which would be normally too large to be handled by a single storage and which would extend beyond the ability of commonly used tools to capture, manage and process the data within a tolerable elapsed time.

The system can be adapted to individual processing requirements of the clients, applications, as well as the complex data stored in the databases. The system provides for a highly flexible and scalable approach enabling immediate processing of complex data and direct interaction with the complex data.

The term rendered output, as used throughout this description, refers to data output by the application intended for presentation in any suitable modality, such as audio data, image/video data, haptics data, force feedback data, and others, as well as combinations thereof. Rendered output may be provided to a suitable output device on the clients. For example, video data may be supplied to a display device via a graphics unit of the client that receives rendered video data and generates respective control signals to control the display device. Similarly, audio data can be provided to speakers or another audio output device via an audio unit resulting in an acoustic presentation or display of the rendered data.

According to a preferred embodiment, the system further comprises at least one supervisor component configured to monitor operating conditions of the one or more processing devices. The supervisor component may be located as a dedicated hardware between the master server and the processing devices in order to observe the performance of the processing device, the individual applications executed on the processing device, and/or the render service continuously. In case of a problem, the supervisor component may interrupt, pause, cancel, restart or reinitiate processing of individual applications, of the render service or of the processing device, in which case the client could quit the application and be redirected back to the master server.

In a preferred embodiment, the at least one supervisor component is further configured to assign the one or more applications to at least one of the one or more processing devices. Initially, the system could be set up with one or more applications reflecting the basic services provided by the system and the individual applications could be distributed over the available processing devices. Based on the operating conditions, the supervisor component may re-assign applications to a different processing component in order to achieve a better balance. The supervisor component may be configured to re-assign applications that are not assigned to a client. However, the system may also provide a re-assignment of applications, which may include one or more of the following steps: pausing the processing of an application, saving the current state, de-allocating the client and the direct connection from the processing device, moving the application to a different processing device, forwarding the client to the different processing devices, re-establishing a new direct connection between the client and the different processing device, and starting the application according to the saved state.

The supervisor component can be implemented as software, hardware or a combination thereof. The supervisor component may be a dedicated processing device or the supervisor component can be implemented as a software module on the master server or on a processing device and may be granted respective permissions to observe the render services provided by at least one processing device. The supervisor component may report to the master server a current state of the processing devices and receive instructions to handle the load balancing of the processing devices in order to achieve an optimal performance of the overall system.

The processed data may include any kind of simulation results, for example resulting from a simulation of complex business data. Using the direct access to the one or more databases, the system may also connect to a plurality of databases, wherein each database may store different data, such as data measured by different sensors or according to different modalities, or individual business-related data, such as stock data, business intelligence data or CRM (Customer Relationship Management) data, and other data. The applications could be configured to combine the data from the different sources and process the data in order to generate a representation of the process data in the virtual store, which may be provided to the render service of the processing device in any suitable form, such as using low-level commands or instructions of a hardware-related programming interface or using high-level commands of an application programming interface of the render service, for example, by describing graphic primitives organized in a scene graph.

The applications may preferably update their processing based on the received input data. Preferably, the input data are indicative of an update of the processed data in the virtual store. Hence, the application could modify and update the processed data and generate an updated output of the virtual store, which is provided to the render service for immediate rendering. The input data may also relate to navigation within the virtual store, for example, adjusting a viewing perspective or a viewing point, highlighting individual representations of the data, updating parameters and aligning representations of the data and others.

According to a further embodiment, the processed data is stored in a temporary storage of the processing device according to one or more versions and the applications are automatically redirected to at least one version of the processed data, wherein one of the applications is configured to manage the temporary storage and to commit a version of the processed data to a respective database. At least some applications executing on a processing device may be configured to work on the same version of the data simultaneously, in order to provide rendered output to several users related to the same version or state of the data. An application may also be configured to accept connections from multiple clients such that the same rendered output could be provided to respective clients. In order to prevent an immediate re-writing of the data back to the databases and to allow for simulation of processes based on the data, each processing device may include a temporary storage, which can be managed by one of the applications. Hence, the applications could work on local copies or versions of the processed data. An application accepting a plurality of connections from several clients may also designate one or more of the clients to take charge of the temporary storage. For example, one or more users operating respective clients may be entitled to modify the processed data, while the remaining users operating the other clients connected to the application(s) working on the same processed data may only be allowed to observe the current processing. Hence, one user or a limited number of users may be granted appropriate access rights to manage the temporary storage, which may, for example, include one or more of creating a copy of the currently processed data, modifying and accepting updates of the currently processed data of the a version, and committing the new version of the processed data to the respective database or databases, after the modifications have been approved by one or more of the users with appropriate access rights. Hence, the approach allows for simulations of complex data, which can be controlled by a limited number of users and observed by a number of other users.

According to another preferred embodiment, the system comprises a database interface coupled to the one or more processing devices and configured to provide unified access to the one or more databases. The database interface may be defined as an abstract layer in order to allow plug-and-play of databases using various kinds of standards and technologies. The database interface may be implemented on the master server or one of the processing devices. The database interface may be also implemented on one or more dedicated hardware devices, which may correspond to the number of attached databases and which may flexibly handle the respective requests. Load balancing may be used for the dedicated hardware devices to implement the database interface, similar to the load balancing of the individual processing devices.

In a preferred embodiment, multiple clients are connected to one application, each client receiving the same rendered output of the application. Preferably, one of the clients may initially connect, via the master server, to the application and may initiate processing of the data and respective rendering of the output using the direct connection. Subsequently, further clients may access the application, via the master server. The master server or the processing component may recognize that multiple clients are connected to the application and set up further direct connections to the other connected clients, wherein the rendered output may be duplicated, broadcasted or otherwise copied, to provide the same rendered output to the clients. The duplication of the rendered output may be done by the render service and passed to subsequent processing component managing the direct connections to the individual client devices. It is to be understood, that while multiple clients may access one application, one client may also be configured to access multiple applications, wherein the rendered output of the plurality of applications can be displayed in different parts of a display of the client device. For example, an operating system using windows can be used on the client and the rendered output can be directly displayed within a window.

In yet another preferred embodiment, the multiple clients are registered as participants of a video conference. The multiple clients can register at the master server by submitting, along with the access request, an indication that they desire to enter a video conference. The application accessed by the clients may be a dedicated application for video conferencing and may register the multiple clients as participants of the video conference as soon as they access the application. Further to an initial authentication of the clients at the master server, either the master server or the application may include means to authenticate the individual users of the connecting clients, which may include checking of permissions to access the video conference. The video conference application may further include means to receive, via the direct connections, respective input of the individual users of the client devices and to broadcast the input, such as typed-in text or an audio/video stream of the respective user, to the other participants of the video conference, either as part of the rendered output or as additional output, which may be rendered by the render service as well and provided as a rendered stream to the clients.

In yet another embodiment, the master server is further configured to manage the one or more clients in response to control commands received from the one or more clients. Further to the direct connections between the processing devices and the clients, the clients may maintain a connection to the master server in order to transmit control commands. Control commands may include management commands, requests to update a state of the application running on the processing devices, commands indicative of a state and bandwidth of the direct connection, and other control commands. The master server may process the control commands and may take appropriate actions, such as managing the clients, load balancing, termination of individual applications, restart of individual applications, instructing the processing devices to adjust the processing with regard to the available bandwidth, and similar tasks. The master server may also forward the control commands to a supervisor component for further processing.

In yet another embodiment, the render service includes a real-time graphics engine configured to generate the rendered output responsive to the at least one application. A rendering engine, as used throughout this description, is a software and/or hardware framework capable of receiving an abstract representation of a scene including graphic elements, acoustic elements, and elements of any other modality, as well as definitions of conditions in the scene, such as light conditions. The rendering engine is capable of processing the information and delivering a highly realistic representation of the scene, including a highly realistic graphical visualization. The rendering engine may utilize a dedicated rendering hardware capable of computing a realistic appearance of the elements or individual objects taking into account surface characteristics, reflections, multiple light sources, ambient light, and other conditions. Preferably, the rendering engine is independent of any application or processing task and may process rendering requests from different applications. The rendering engine may be provided as hardware, software or a combination thereof. For example, the rendering engine may be implemented on a dedicated resource of the processing device including a driver. The rendering engine may be the CryEngine available from Crytek GmbH, Frankfurt am Main, Germany. The rendering engine may be configured to provide a rendering quality that is comparable to a best-looking, animated, photorealistic graphics available for real-time rendering for any application, such as games, business, television applications, and others. Hence, the generated rendered output may be completely independent of the available resources on the client as long as the client is capable of displaying the rendered output.

In a preferred embodiment, the rendered output includes a rendered video stream reflecting the output of the application. The applications may continuously provide their output to the render service responsive to any input or processing results or any other internal state of the application. The render service may immediately render the data, i.e. only within a short or almost unnoticeable time period, such as of less than 100 ms, preferably of less than 50 ms, and most preferably of less than 10 ms, and transmit the rendered output via the direct connection to the clients. Hence, the rendered video stream corresponds to an output of the application, which would be normally displayed on the local processing device. Hence, except for the latency of transmission or a possible compression of the video stream, the video stream cannot be distinguished from a local output.

In a preferred embodiment, the rendered video stream is variably encoded based on an available bandwidth of the direct connection. Either the master server, or the processing device, or the supervisor component can monitor the available bandwidth of the direct connection and may adjust several parameters of encoding of the rendered video stream, such as resolution, level of compression, frame rate, and other parameters. The rendered output may be generated by the render service independently of the bandwidth of the direct connection, and may be passed to a dedicated processing component, which may continuously receive indications of the current bandwidth and automatically perform encoding of the rendered output according to the indications.

In a further embodiment, the one or more processing devices are set up as a cluster controlled by the master server. The cluster may consist of a set of loosely connected or tightly connected computing devices that work together so that they can be viewed as a single system providing the render service. The components of the cluster may be connected to each other through a fast local area network, wherein each node of the network may correspond to a computing device. The cluster may also be set up as a grid or cloud, which is controlled by the master server and provides the services related to processing of the complex data.

Preferably, the method for providing a virtual store in an interactive simulation environment based on network-based render service may comprise the steps of executing one or more applications on one or more processing devices, each processing device providing a render service configured to render output of at least one application executed on the processing device, and providing data from one or more databases, said data to be processed by the one or more applications. The method further comprises managing, by a master server, one or more clients, receiving an access request from a client of the one or more clients, the access request identifying one of the one or more applications, forwarding the client to the processing device executing the identified application, establishing a direct connection between the processing device and the client, wherein the rendered output of the identified application is provided to the client via the direct connection, and re-directing the client back to the master server if the client quits the application.

In one embodiment the method further comprises monitoring, by at least one supervisor component, operating conditions of the one or more processing devices.

According to another embodiment, the method further comprises assigning, by the at least one supervisor component, the one or more applications to at least one of the one or more processing devices.

In yet another embodiment, the method further comprises processing, by the applications, data from the one or more databases and generating output including a representation of the processed data.

According to one embodiment, the method further comprises receiving, by the applications, input data from respective clients via said direct connections.

In another embodiment, the input data are indicative of an update of the processed data.

According to yet another embodiment, the method further comprises storing the processed data in a temporary storage on the processing device according to one or more versions, automatically redirecting the applications to at least one version of the processed data, managing, by one of the applications, the temporary storage, and committing, by the one of the applications, a version of the processed data to a respective database.

According to another embodiment, the method further comprises providing a unified access to the one or more databases using database interface.

In yet another embodiment, the method further comprises providing the same rendered output of an application to multiple clients connected to the application.

According to another embodiment, the method further comprises registering the multiple clients as participants of a video conference.

According to yet another embodiment, the method further comprises managing, by the master server, the one or more clients in response to control commands received from the one or more clients.

In yet another embodiment, the method further comprises generating the rendered output by means of a real-time graphics engine.

In a further embodiment, the method further comprises rendering a video stream reflecting the output of the application into the rendered output.

In yet another embodiment, the method further comprises variably encoding the rendered video stream based on an available bandwidth of the direct connection.

In another embodiment, the method further comprises setting up the one or more processing devices as a cluster controlled by the master server.

According to a further aspect, a computer-readable medium is provided, such as a non-tangible computer-readable medium, said computer-readable medium having instructions stored thereon, wherein said instructions, when executed by a computing device, cause said computing device to automatically perform a method according to embodiments of the present disclosure. In particular, the computing device may automatically perform a method for providing a virtual store in an interactive simulation environment based on a network-based render service, the method comprising executing one or more applications on one or more processing devices, each processing device providing a render service configured to render output of at least one application executed on the processing device, providing data from one or more databases, said data to be processed by the one or more applications, wherein the one or more applications are configured to process the data, to assemble at least some of the processed data in a virtual store, and to provide as output an interactive representation of the virtual store, receiving an access request from a client of one or more clients, the access request identifying one of the one or more applications, establishing a direct connection between the processing device executing the identified application and the client, providing, by the render service of the processing device, the rendered output of the identified application to the client via the direct connection as an interactive simulation environment including the interactive representation of the virtual store, and receiving, by the application, input data from the client via the direct connection indicative of an update of the virtual store..

According to yet another aspect, a processing device is provided, comprising a memory storing instructions encoding at least one application, a processing unit configured to execute the at least one application, and to provide a render service configured to render output of the at least one executed application, communication means configured to connect the processing device to one or more databases providing data to be processed by the at least one application, wherein the one or more applications are configured to process the data, to assemble at least some of the data in a virtual store, and to provide as output an interactive representation of the virtual store, wherein the processing unit is further configured to connect the processing device with a master server configured to manage access to the one or more databases, a display device configured to display the rendered output as an interactive simulation environment including the interactive representation of the virtual store, and input means providing input data to the application indicative of an update of the virtual store.

Preferably, the processing device may comprise a memory storing instructions encoding at least one application, a processing unit configured to execute the at least one application, and to provide a render service configured to render output of the at least one executed application, communication means configured to connect the processing device to one or more databases providing data to be processed by the at least one application, and to connect the processing device with a master server configured to manage access to the one or more databases, and a display device configured to display the rendered output.

According to this aspect, the system may be deployed on the processing device, such as standard PC desktop machine, which may run a local copy of the render service of the network-based system and use communication means to connect to the one or more databases via the master server. Preferably, the master server could be configured to operate as a proxy server.

The processing device and its render service may be configured to include any features of the network-based system according to embodiments of the present disclosure or may be configured to perform processing steps of one or more methods according to embodiments of the present disclosure.

The disclosure provides a network-based system, a method and a processing device which allow for management and simulation of a virtual store, including highly complex data, such as administrative data related to business and administrative entities. Furthermore, the virtual stores may include any further data, such as results of physical and/or chemical simulations. The access to the complex data and processing of the data is mediated by the master server and dedicated applications executed on processing devices, which provide instantaneous processing results of a high quality. Hence, the approach is highly flexible with regard to applications for processing data, various formats of databases storing the complex and large data sets, and a direct communication between the clients and the applications using dedicated direct communication links.

### DESCRIPTION OF THE DRAWINGS

The specific features, aspects and advantages of the present disclosure will be better understood with regard to the following description and accompanying drawings where:
- Fig. 1: shows a schematic diagram of a system according to one embodiment of the present disclosure;
- Fig. 2: shows a flow chart of protocols used in a system according to one embodiment of the present disclosure;
- Fig. 3: shows a generic view of a virtual store according to embodiments of the present disclosure;
- Fig. 4: shows a user interface enabling shelf management in a virtual store according to embodiments of the present disclosure;
- Fig. 5: shows an overview of product shelves in a virtual store according to embodiments of the present disclosure;
- Fig. 6: shows interaction with a virtual store, including dynamically adding listings, according to embodiments of the present disclosure;
- Fig. 7: shows detailed information of a product in a virtual store according to embodiments of the present disclosure;
- Fig. 8: shows an exemplary data flow and components according to one embodiment of the present disclosure;
- Fig. 9: shows a message flow of a system according to embodiments of the present disclosure;
- Fig. 10: shows another message flow of a system according to one embodiment of the present disclosure; and
- Fig. 11: shows yet another message flow of a system according to one embodiment of the present disclosure.

### DETAILED DESCRIPTION

In the following description, reference is made to drawings which show by way of illustration various embodiments. Also, various embodiments will be described below by referring to several examples. It is to be understood that the embodiments may include changes in design and structure without departing from the scope of the claimed subject matter.

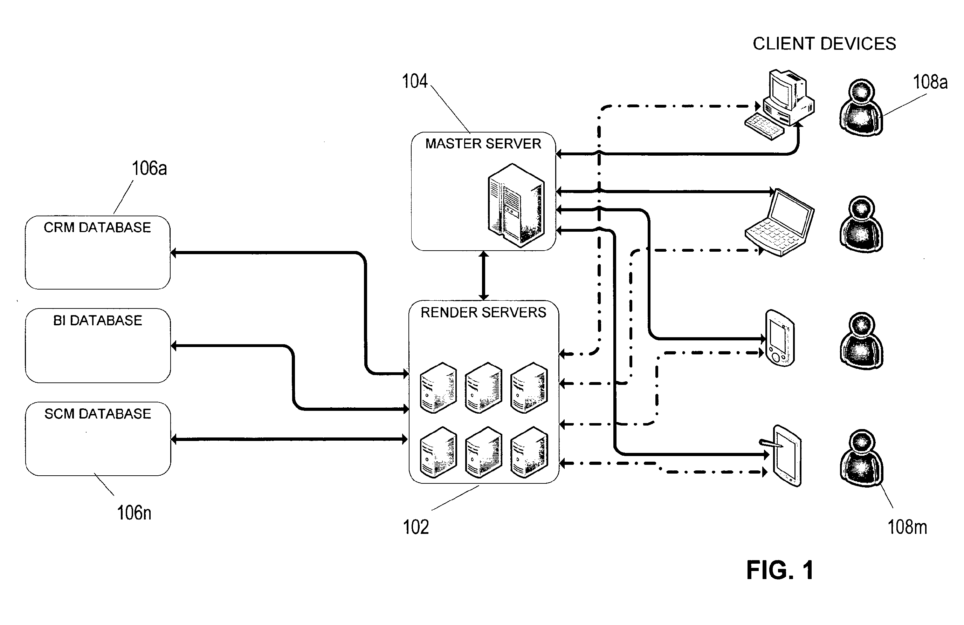

Fig. 1 shows a schematic overview of a system according to one embodiment of the present disclosure. The system 100 may include one or more processing devices, labelled as "render servers" in Fig. 1, which could be set up as a cluster or grid 102 that could be controlled by a master server 104. Each processing device may be configured to execute at least one application and host a render service, wherein the render service is configured to render output of the executed applications.

The system 100 further includes a plurality of databases 106a, ..., 106n, which are each coupled to the grid 102 of render servers and provide data to be processed by the applications executed on the individual render servers.

The system 100 further includes a plurality of client devices 108a, ..., 108m, which are connected to the master server 104 using persistent connections 104, as indicated by solid lines. The master server 104 may manage the plurality of client devices 108a, ..., 108m. The client devices 108a, ..., 108m may send access requests to the master server 104 that indicate a service provided by an application executed in the grid 102. The master server 104 may check the access request, identify the application providing the service and forward the client to the respective render server in the grid 102, which executes the identified application. The render servers of the grid 102 may be controlled by the master server 104 and may receive the connection requests from the client devices 108a, ..., 108m via the master server 104. As soon as a request is accepted, the master server 104 could instruct the render server to establish a direct connection to the respective client device according to instructions from the master server 104 or a direct negotiation between the render server and the client device. This connection could be a temporal connection, as indicated by the dotted line between the grid 102 and the client devices 108a, ..., 108m, and could be established for the duration of the interaction between the application and the respective client device. The direct connection can be used to provide the rendered output of the application from the rendered server to the client device and to receive input data from the client device. In order to improve the transmission of data, the direct connection may be assigned to the render service and the application.

The master server 104 may handle all incoming "first time" access requests from individual client devices 108, ..., 108m and may manage a pool of connected client devices 108, ..., 108m. The connected client devices 108, ..., 108m may specify a service or an application, which they would like to connect with, and send a respective access request to the master server 104. The master server i104 may identify the requested application and forward the client to the processing device executing the identified application. Each processing device may process, via a respective application, data and output for more than one client device 108, ..., 108m, depending on its processing resources and power. For example, processing devices may be equipped with n graphics cards, wherein each graphics card could handle rendering for m clients. Accordingly, the processing device could handle rendering of output for n*m clients simultaneously. Hence, a configuration of the render servers in the grid 102 can be selected, in order to represent the desired or expected load of the system 100.

After initialization, an application could connect directly with the client and with the one or more databases 106a, ..., 106n to retrieve needed data sets and start processing the retrieved data. The user operating the client device may perceive the rendered output as a running application on the local client device. All input actions of the user related to the rendered output may be transferred back to the application and will be executed and handled there. In turn, an updated rendered output will be transferred back to the client via the direct connection, and so on.

The client devices 108a, ..., 108m may be implemented as hardware, software or combinations thereof, for example, as client device hardware. The client may be capable of connecting to a network, such as the Internet or any other communications network, over any kind of carrier and using any kind of protocol, and could also indicate to the master server 104 a preference for a network to establish the direct connection. Hence, the direct connection could be established using the same network or a different network. As shown in Fig. 1, the client devices 108a, ..., 108m may be any kind of device capable of connecting to a network in order to establish the temporal and persistent connections via one or more networks, displaying the rendered output, such as an audio/video stream, and sending control commands back to the master server 104 and to the render servers. The client devices 108a, ..., 108m may include any kind of processing device, such as tablets, smartphones, laptops, netbooks or desktop PCs, and any other suitable handheld or stationary processing device.

The client devices 108a, ..., 108m may comprise input means and/or display means, said input means adapted to provide user input and/or said display means adapted to display the rendered output. The input means may comprise one or more of a keyboard, a pointing device, such as a mouse ball, track ball, joystick, touch screen or touch pad, microphones, video cameras and other sensors and trackers suitable to monitor and process input gestures of a user. For example, the video cameras may be configured to track facial expressions of the user and based on the recognized facial expressions may generate corresponding user input data. Likewise, microphones may receive audio signals corresponding to spoken words, may recognize a command based on the audio signals and generate user input data indicating the recognized command. The output means may comprise a projector, a display device, a stereoscopic display device, speakers, vibration devices, false feedback devices, and other output units suitable to represent rendered data in one or more modalities.

During processing, the applications may retrieve data from the one or more databases 106a, ... 106n, process the data, and generate respective output, which may be thereafter transferred to the render service of the render server and provided to the respective client device via the direct connection. The data may include complex data of a large size, distributed over the one or more databases 106a, ..., 106n, such as experimental results from physical or chemical experiments or business-related data such as CRM (Customer Relationship Management), SCM (Supply Chain Management), HR (Human Resources), TPM (Trade Promotion Management) data. The databases 106a, ..., 106n represent examples of attached databases, to which the grid 102 of render servers is connected to. It is to be understood that the system 100 is highly flexible in connecting databases to the grid 102 and is, therefore, not dependent on a particular architecture of databases.

The system 100 may also include a supervisor component, also called a "grid supervisor" (not shown), which may be located between the master server 104 and the grid 102 of render servers to observe the render server's performance continuously. In case of any problem, the supervisor component may cancel an application and move it to a different render server of the grid 102, for example, in order to achieve a better balance.

The system 100 operates according to a system workflow, wherein the master server 104 handles all incoming "first time" access requests from the client devices 108a, ..., 108m. The master server 104 handles load balancing of the grid 102 of render servers to guarantee an optimal performance. The system 100 can manage several applications in parallel, working independently from each other. These applications may further exchange data via the master server 104 or local communication means between the render servers of the grid 102. Furthermore, the grid supervisor may directly control the render servers and the provided render service within the grid 102.

The render service of the render servers in the grid 102 may send a video stream to the client devices 108a, ..., 108m, independent of the individual features and resources of the client devices 108a, ..., 108m. Hence, the user experience may be always the same, no matter what device the user is using.

As long as the requirements of the render service of the system 100 are met, the performance of the processing and rendering of the applications will always be the same, excluding bandwidth variations of the direct connections, which may depend on the location and situation of the user operating the client device, which may, however, be handled by corresponding screen encoding, which may be variably adjusted to the available bandwidth.

Editing of any data displayed on one client device will result in a transfer of said data back to the render server. Based on the configuration of the application and the access rights of the client devices, the application may directly transfer the edited data back to the database 106a, ..., 106n. The edited data may directly lead to an update of the processed data, which will be again immediately transferred back to the new client devices and displayed on respective output means. For example, any relevant data, such as key experimental results or accompanying profit may be directly transferred back to the client device and displayed thereon. However, actual data is only transferred between the database 106a, ..., 106n and the render servers in the grid 102. The actual rendering may be completely done by the render service on the render servers, thus the performance is always stable. By using the grid supervisor, the system 100 can automatically detect applications, which require more resources and balance the load on the individual render servers of the grid 102.

The system 100 may also allow for simulating certain changes and variations before these are executed and stored in the actual databases 106a, ..., 106n. For example, based on typical forecast data, a user operating a client device 108a, ..., 108m can simulate the creation of a product promotion and has different settings for the duration, price cut, or margin. Similarly, simulation parameters can be adjusted to typical scenarios. As soon as the user operating the client device is satisfied with a result, he can store the data according to the simulation in the database 106a, ..., 106n for later use and execution. Another example could be a deal that is planned, but not yet signed. Inside the system 100 and respective applications, the user operating the client device can test different variations to see a simulated result.

The system 100 can handle several accesses to different databases 106a, ... 106n simultaneously to add a real benefit to the user. Hence, the applications can access any kind of databases 106a, ..., 106n and switching between different applications or even systems dedicated to particular databases is not necessary for the user. Furthermore, the user can directly access different data from different databases and merge the data in order to allow for a better (and faster) overview of a current state or situation represented by the data. For example, the system 100 can connect in parallel to a CRM database, a stock management database and a business intelligence database. All tree sources may grant the user a combined view onto a certain order situation of a specific customer, viewing the customer's data and also seeing the impact of the orders to the profit changes. The databases may also reflect experimental data derived from a variety of sensors involved in measuring physical entities during a physical or chemical experiment, such as provided by a particle collider.

Due to providing the render service online in the grid 102 of render servers, the render servers can be connected to a powerful graphics engine in order to generate superior data visualizations, such as the Cryengine and the rendered quality may be comparable to the best-looking, animated, photorealistic graphics available for real-time rendering for any application, be it games, business, television and others. As already discussed above, any other suitable modality can be rendered in order to generate a rich experience of the processed data.

The system 100 may support multiple client devices 108a, ..., 108m connecting to the same database data via the same application executed on a render server of the grid 102. Hence, the client devices may receive individual roles, such as a "presenter", "spectator" or "listener", in order to define access rights of the users for the processed data. Hence, one user can modify the processed data and present the updates to all other connected client devices. This may, for example, allow for a remote collaboration of a group of users. Obviously, the same data can also be modified by more than one user and the application could manage the collaborative updates, which could be, for example, timely separated.

According to one example, a "presenter" could connect his client device to a render server and the client device may receive data via the render service based on the processed data from one or more of the databases 106a, ..., 106n. The presenter could change the data, which could be thereafter directly transferred back to the database. Other users may be defined as pure "spectators", i.e. they may have no rights to modify any data, and receive the exact same video stream as the presenter. Since the spectators do not have permissions to modify the processed data, they are not directly connected to the database via the application and may only perceive the output of the render service on their client devices.

According to a further example, which could be referred to as a collaboration mode, multiple users may have their own connections, via the application, to the database. All users may see the changes of the data made by other users immediately and will also receive their own changes. Each client device of a collaborative user may be connected to the render service and, via the application, to the database. Hence, every collaborative user may also be a "presenter". Hence, a session of client devices accessing an application can have multiple "presenters", and each presenter can have multiple "spectators" or "viewers".

The system 100 may connect to the actual databases 106a, ..., 106n via protocol interfaces. Through the protocol interfaces, any standard or custom-made database can be attached to the grid 102 of render servers without changing the actual application logic.

The render service may be implemented as a software module or as a hardware component on the processing devices of the grid 102. The render service may receive the output of one or more applications. For example, the applications may associate graphic elements with individual processing results and provide the graphic elements as output to the render service. The render service may process the output and generate a rendered stream. Since the rendering is done online, the client devices 108a, ..., 108m need not to include any dedicated rendering hardware or software in order to further process the rendered output. Rather, the client devices 108a, ..., 108m may be configured to receive and display streams on suitable output means. The online render service can provide one or more of audio streams, image/video streams and streams for other modalities or combinations of modalities, such as audio, image/video, haptics feedback, force feedback, olfactory feedback, gustatory feedback, and combinations thereof. For example, the online render service may provide two streams, a video stream and an audio stream that are provided to the client device and output on a display and on speakers, respectively.

The graphic elements of the output of the application may be arranged in a scene graph. A scene graph, as used throughout this description, is a general data structure that arranges representations of entities in a graphical scene. The scene graph may include a collection of nodes associated with the representations of the entities and arranged as a directed graph or tree, wherein each node may have children nodes and a parent node. Typically, nodes without children nodes are called leaf nodes and nodes having one or more children nodes are referred to as group nodes. Leaf nodes may reference objects, sprites, sounds, light, or anything that could be considered as rendered. Typically, an operation performed on a parent node automatically propagates to its children nodes and eventually to the leaf nodes. Each node of the scene graph may include further parameters, such as a transformation matrix, which are applied during processing of the node. For example, the transformation matrix may define a local transformation of the node with respect to the parent node.

The graphic elements may include one or more geometric primitives or shapes, such as spheres, cylinders, tubes or boxes, toroids, pyramids, triangular meshes, point clouds, and others. The type of geometric primitive may be directly determined by the type of the data of the associated data set. For example, a data set may include a sequence of numerical values, such as results from a sequential experiment or business data, such as key performance indicators (KPIs), which may be represented by cylinders or respective boxes stacked on top of each other, wherein a dimension of the graphic element may correspond to the respective numerical value of the data.

The rendered output may also include a representation of one or more interactive elements and the application may be configured to receive user input related to an interaction with at least one of the interactive elements. The interactive elements may include one or more of a slider, a scrollbar, a button, a representation of a position and/or orientation of a pointing device, a highlighting element, such as a bounding box indicating graphic elements that can be selected, and other suitable interactive elements. A user may activate an interactive element with a suitable input device of the client device. The respective user input data may specify the interactive element and the selected graphic element. For example, the user may interact with a slide bar to select different viewing perspectives on the processed data. In turn, the application may update the viewing perspective on the scene graph responsive to the user input and provide updated rendered data in accordance with the chosen perspective.

Further to the example described in Fig. 1, the approach according to embodiments of the present disclosure can also be launched on a non-"render service" machine. If a standard PC desktop machine is used, it may typically run a local copy of the render service and use a special proxy server, such as the master server 104 to connect to the needed databases 106a, ..., 106n. Hence, the stand-alone version may be a local version of the render service on a desktop machine or a laptop. It may connect to the master server 104 for authorization and database connections. However, it needs not to connect to the remote grid 102 of render servers, as the local machine is capable of running the render service.

The claimed subject matter, in particular the system workflow, as well as respective applications and the rendering service, may be implemented using object-oriented programming techniques. For example, each component or interface of the system 100 and each processing step of the method according to embodiments of the present disclosure can be an object of a software module. Object-oriented programming utilizes units of software called "objects", which encapsulate both data and functionality. Objects according to object-oriented programming represent software entities comprising data structures and operations on the data. This structure enables objects to model any real-world entity in terms of its characteristics represented by state elements, and its behavior represented by its functions. In this way, objects can model real things and abstract concepts like mathematical functions or geometrical computations. The applications executed on the render servers of the grid 102 may be defined as objects, reflecting the data from the databases and the desired processing functionality of a service. The render service provided by the render servers as well as the graphics engine or at least parts thereof can be implemented using object-oriented programming techniques.

As used throughout this description, the terms "component", "interface", and "system" are intended to refer to a computer-related entity, either hardware, firmware, a combination of hardware and software or executed software. A component can be, but is not limited to a computer, a process running on a processor, a processor, an object, an executable, a thread, and/or a program. By way of illustration, both an application running on a processing device and the processing device can be a component..

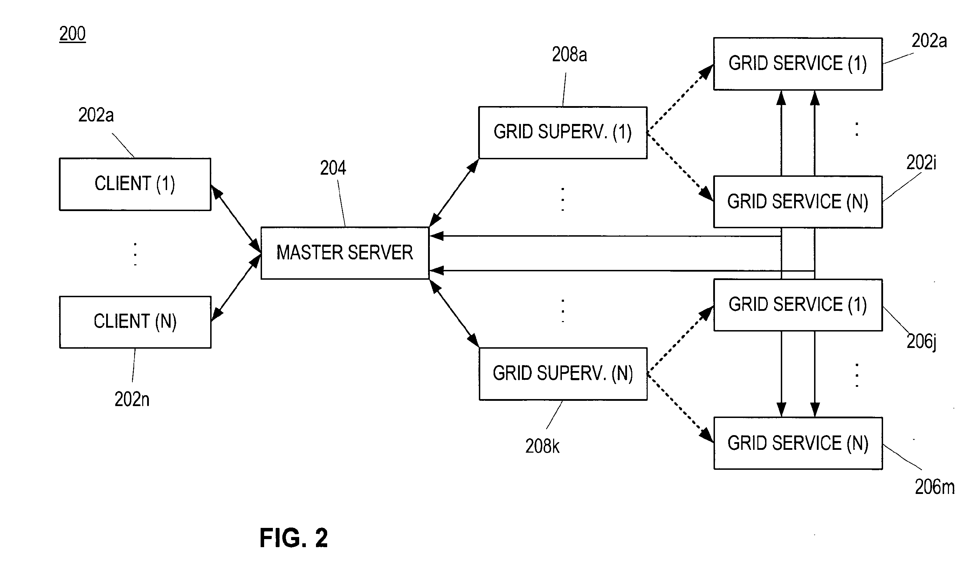

Fig. 2 shows a protocol flow of a render service architecture according to one embodiment of the present disclosure. The general overview of the communication flow in Fig. 2 may illustrate protocols used between components and applications that are involved in the architecture 200 of a system, such as the system 100 shown in Fig. 1. A plurality of clients 202a, ..., 202n may communicate with a master server 204 according to an interface protocol. The interface protocol may also be used for the communication between the master server 204 and one or more render services 206a, ..., 206m, which can be executed on individual render servers, such as the render servers of the grid 102 shown in Fig. 1. For example, a subset of the render services 206a, ..., 206i, or 206j, ..., 206m, can be executed on individual render servers or a group of render servers, which can be controlled by grid supervisors 208a, ..., 208k. The master server 204 may communicates with the supervisor modules 208a, ..., 208k according to an observer protocol.

The supervisor modules 208a, ..., 208k need not to have a direct interface with the individual render services 206a, ..., 206m, but may control the render services 206a, ..., 206m from the outside, as indicated by dotted lines in Fig. 2. For example, the supervisor modules 208a, ..., 208k may start and stop the render services 206a, ..., 206m. For example, if a render service does not react anymore, the supervisor module in charge can kill the instance of the render service 206a, ..., 206m without actually communicating with the render service. As shown in Fig. 2, the supervisor module 208a may control the subset of render services 206a, ..., 206i and the supervisor module 208k may control the render services 206j, ..., 206m and respective applications.

The master server 204 may communicate with the render services 206a, ..., 206m using an internal protocol, which may be directed at internal control of the render services 206a, ..., 206m and respective applications.

Accordingly, the interface protocol, the internal protocol, and the observer protocol can be implemented by the instances of the system architecture 200 to expose the desired functionality.

The exemplary approach according to embodiments of the present disclosure may display all relevant products of a company of the user in a virtual store, ordered in a fashion, in which the user may easily find needed data, such as individual products. The virtual store can be customized to fit the company's style and ways of product objects, color schemes and shelve style.

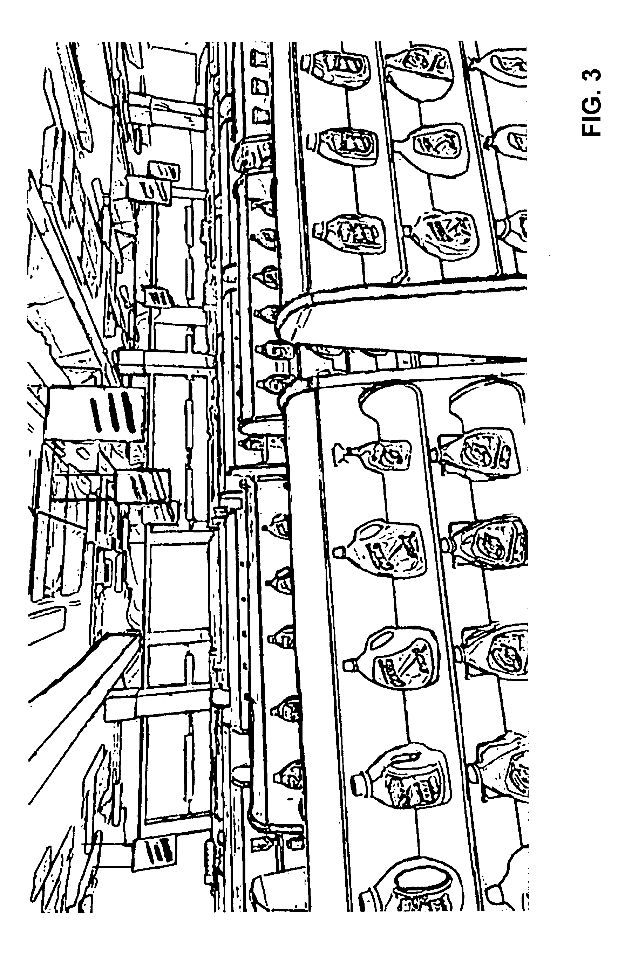

Fig. 3 shows a generic view of a virtual store according to embodiments of the present disclosure. The user can navigate freely through shelf rows of the virtual store, using a client device, such as a touch device, a mobile tablet or a touch-sensitive monitor, or accessing the system via a standard computer with a pointing device, like a mouse. Activating different elements of the virtual store, such as listings, may add more shelf rows as needed. Deactivating such listings may hide the rows again. The same functionality may apply to product categories or groups. The goal of the interactive interface is to reduce the amount of information on screen the user needs to a minimum, thus accelerating the navigation and general operations.

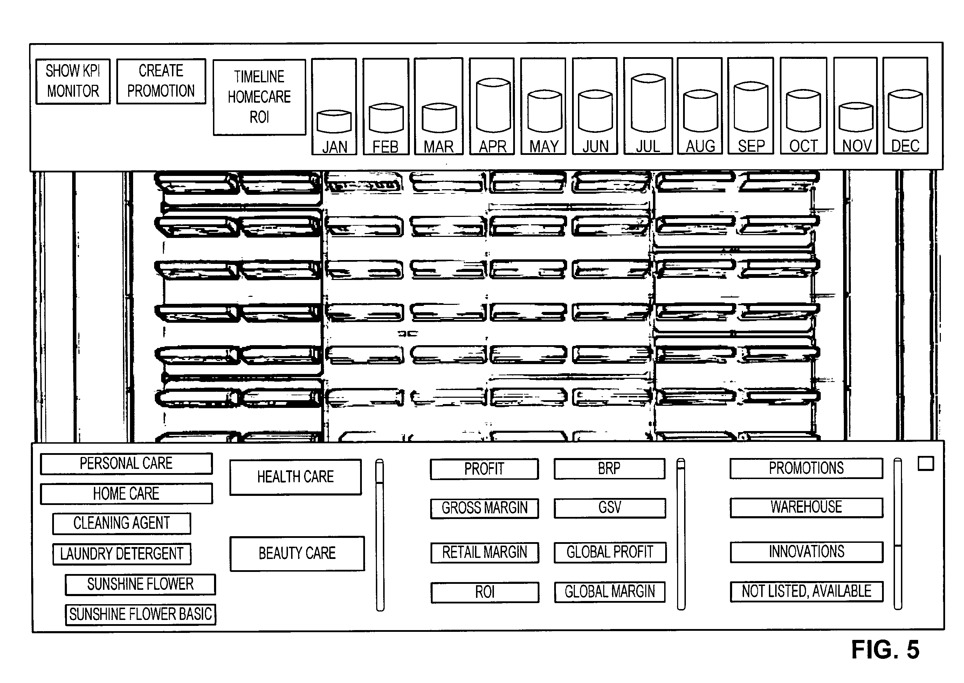

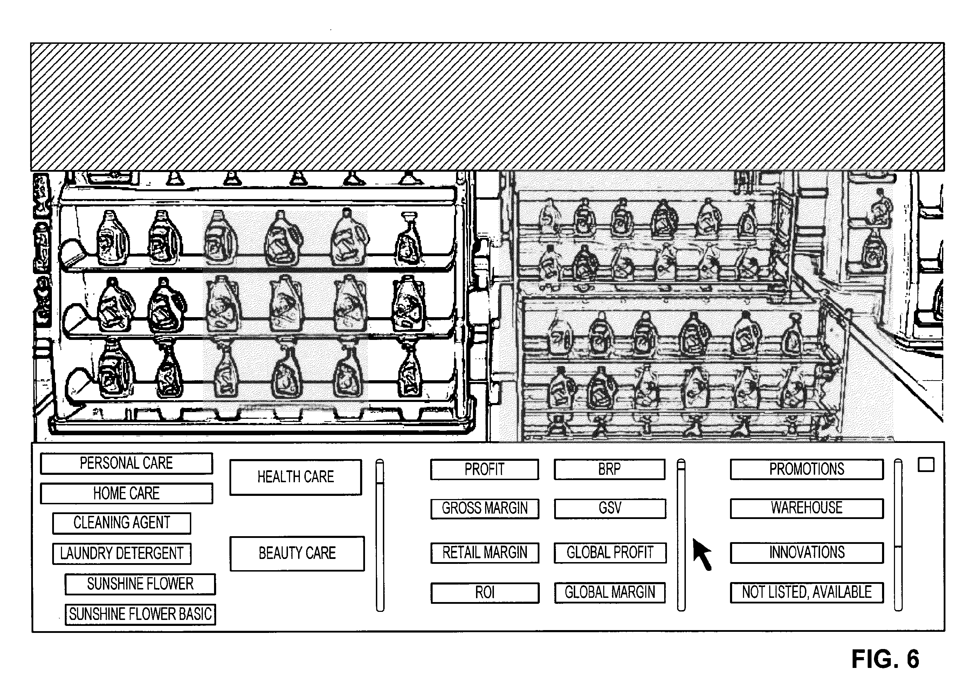

As shown in Figs. 3 to 7, which shows different representations of the virtual store that are provided as rendered output to individual client devices according to embodiments of the present disclosure, each shelf may store several products, where the amount of products may be dynamic, e.g. the user can increase or decrease the amount per shelf by submitting respective input data to the application, which, in response, retrieves the required data from the databases.

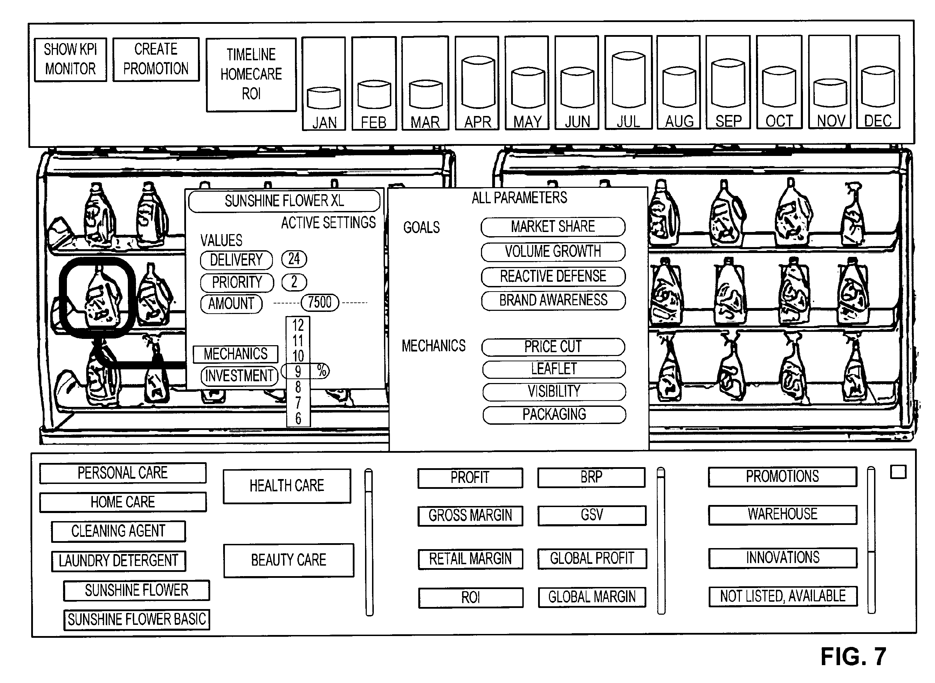

Viewing information about the product may be done by clicking on the product as shown in Fig. 7. Available data on the product may be displayed and can be edited, where editing is applicable.

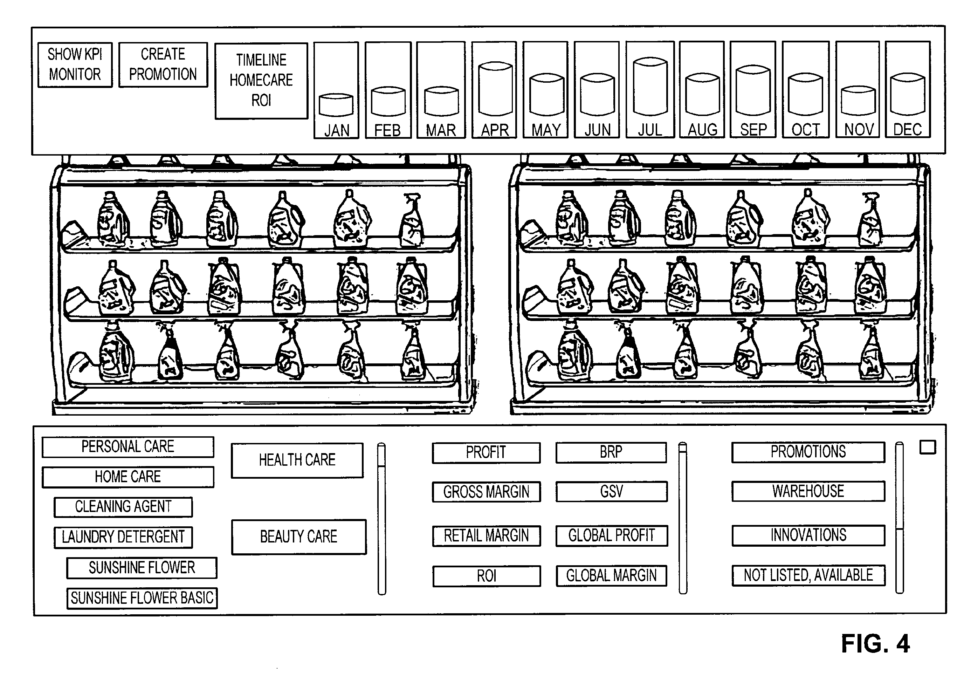

The user can create new items, such as promotion campaigns. Therefore, he may click the corresponding button to create a promotion, such as the "promotions" button displayed in Figs. 4 to 7. The system may automatically fill in standard data and ask the user to add the needed information.

Navigation in the system may be seamless in order to allow an optimal orientation of the user, e.g. as the user moves around the data landscape, e.g. in the virtual store, he may always keep a sense of spatial positioning compared to a rather abstract switch between old-fashioned pages, masks or even independent applications.

Editing any data displayed in the virtual store may result in a transfer of such data back to the database and may be used to optimize the company performance. If any relevant data, e.g. the company profit, changes due to the updated data, this is immediately transferred back to the application and provided as rendered output to the user's client.

The approach may also allow to simulate certain changes before these are executed and stored on the actual databases. Based on typical forecast data, a user can simulate for example the creation of a product promotion and test different settings for the duration, price cut or a margin. As soon as the user is satisfied, he can then store the data in the database for later execution.

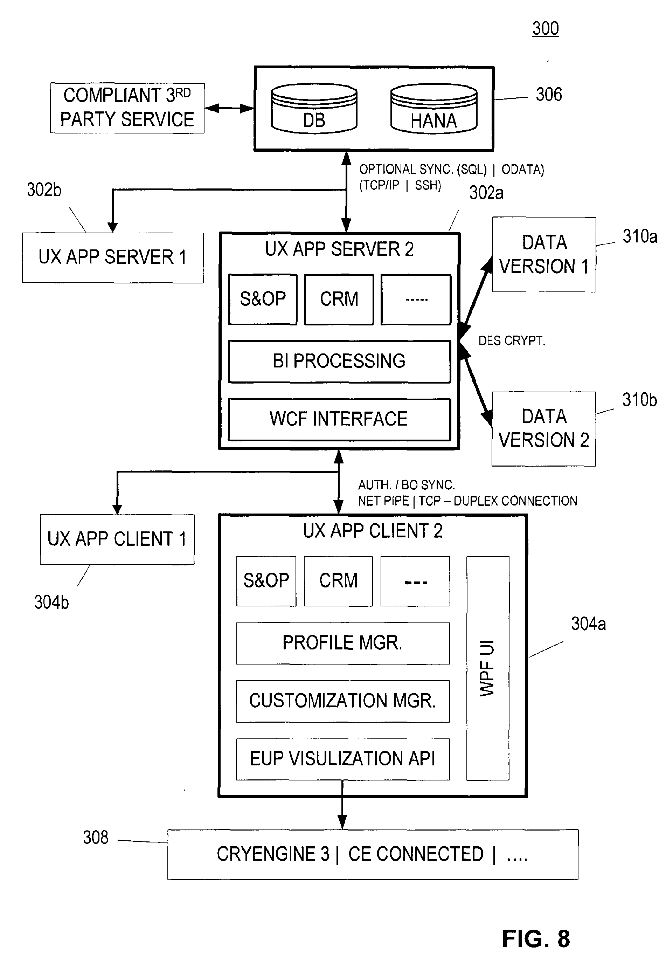

Fig. 8 shows an exemplary data flow and components of a system architecture according to embodiments of the present disclosure. The system architecture 300 includes physical render service machines 302a, 302b which may host multiple instances of applications, such as application 304a and application 304b. It is to be understood, that application 304a and application 304b can be instances of the same application or two different applications. Each machine 302a, 302b is designated as "UX server", wherein UX refers to user experience. Accordingly, the applications 304a, 304b are labelled as "UX app client" and "UX app client", respectively.

Each instance of an application 304a, 304b can be targeted towards one user. Hence, if multiple users connect to one application, multiple instances of the application can be created. However, an application can also be configured to handle multiple users simultaneously. The application 304a may be divided in a front end renderer and a data processing server component. The data providing server component may access, via the machine 302a, individual databases 306 and the front end renderer module may access a rendering service, such as a graphics engine 308 in order to provide a rendered output of the application 304a. As shown in Fig. 3, the front end renderer's module may utilize the CryEngine 3, in order to handle three-dimensional graphics data. Furthermore, the front end render module may utilize another component to generate 2D output, for example Windows Presentation Foundation (WPF).

The application 304a may include different modules, like S&OP (Sales and Operation Planning), CRM (Customer Relationship Management), different managers and application programming interfaces, in order to connect to a master server (not shown), such as the master server 104 in Fig. 1, and to access individual databases 306. These different modules may run on top of the graphics engine.

Further to the direct access to the databases 306, the application 304a may also be configured to work on several versions of the data, which may be stored by the machine 302a, such as the data version 1 and data version 2, 310a, 310b, respectively. The individual data versions 310a, 310b may be further encrypted using standard encryption techniques, such as DES, in order to improve security of sensitive data. The machine 302a may have access to different kinds of databases 306 and may perform processing of large data sets stored in the databases 306 according to the instructions of the application 304a.

The applications 304a, 304b may communicate with the machine 302 using any suitable or bidirectional communication protocol, such as TCP, or NetPipe using duplex connections. Furthermore, in order to further improve security, users could be authenticated or authorized by the applications 304a, 304b. The application 304a may also include a user interface, which could be, for example, generated using WPF.

The machines 302a, 302b may communicate with the databases 306 using a suitable communication protocol, such as TCP/IP, which can be further encrypted or secured, for example using SSH. The database communication can be further configured to support optional synchronization and other features. For example, different databases may have different capabilities to communicate with attached systems, therefore, the fastest way to exchange data can be chosen. For example, a SAP HANA real-time database may allow for a very fast exchange of data and can handle some computation on its side directly. Furthermore, some databases may handle certain data computations on their side, while some databases grant access to raw data only, which can be thereafter transferred to the respective applications. The databases 306 can be managed using any third party compliant service. Furthermore, it is to be understood that by following certain protocols and interfaces, any suitable database can be connected to the architecture 300.

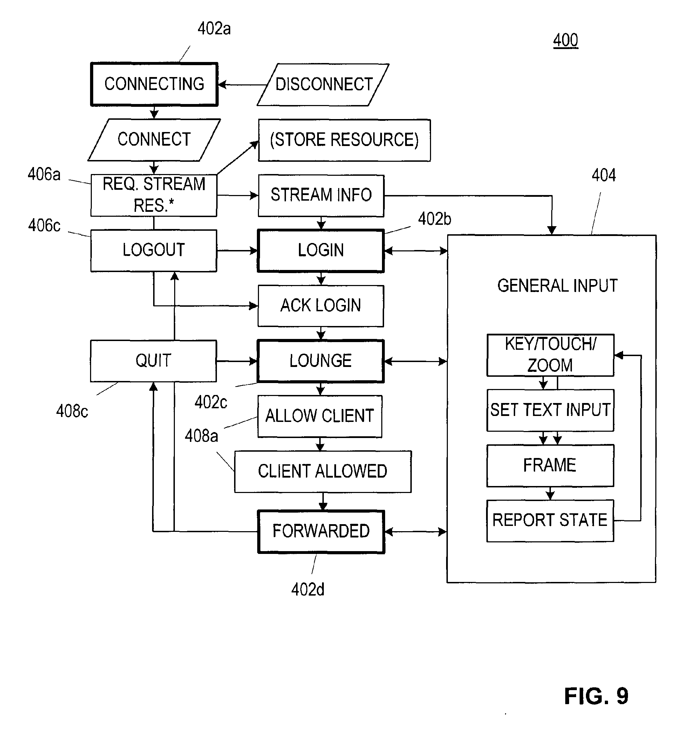

Fig. 9 shows a flow chart of a message flow for an architecture according to one embodiment of the present disclosure. The flow chart 400 shows basic messages and events that are necessary to connect a client to a master server, such as the client devices 108a, ..., 108m and the master server 104 shown in Fig. 1. The basic messages further provide for simple interaction between the client and the master server. The master server may choose different states for the client, such as "connecting" 402a, "log-in" 402b, "lounge" 402c, and "forwarded" 402d. These states may change depending on the provided input.

A disconnected client may remain associated with the master server, however, may have the connecting state 402a assigned to it. After connecting to the master server, the first request from the master to the client is "stream resolution / stream res." in item 406a in order to initiate a video stream of the initial log-in screen. It is to be understood that after this first connection a video stream is already started, rendered on the master server. Preferably, this video stream is of no demanding render performance, e.g. it may be a simple screen capture video of a 2D surface, and can be handled easily on the master server. One reason why this simple user interface is rendered as a video stream is to enable a client device that is as thin as possible and does not need to be updated with any graphical elements at all, as these are all part of the video stream. Personal resources can be stored and a streaming info can be provided to the client, according to a protocol, such as the interface protocol discussed with regard to Fig. 2. The personal resources may include personal changes a user would like to have stored with his profile, e.g. visual theme attributes like background color, font size, etc. As the visual display may be rendered on the master server, these informations could be stored on the server side to allow a uniform look of the user interface on all of a user's client devices. Therefore, the client may be assigned the log-in state 402b and the master server can wait for general input 404.

Providing general input 404 may include several states, including generating input data on the client device, such as using a keyboard, a touch screen, or a pointing device to zoom in or zoom out, which may be used to generate text input or a next frame. The results may be reported as a state to the master server. All processing may be performed according to the interface protocol, and the results may be reported back to the master server.

In the log-in state 402b, the client may provide the log-in data to the master server, which may verify the log-in and assign the lounge state 402c to the client, if the log-in was successful. Otherwise, the connection with the client could be refused by the master server. In the lounge state 402c, the clients are managed by the master server and may formulate access requests in order to access an application and/or a render service. Based on general input 404, the master server could identify a render server, hosting the desired application and/or render service and negotiate with the render server to accept the client. In particular, the master server could send a request to the render server in item 408a and the render server could respond in item 408a. Item 408a could be implemented using a protocol, such as the internal protocol discussed with regard to Fig. 2.

If the client is allowed in item 408a, the client may be assigned the forwarded state 402d. The general input 404 triggered in the forwarded state 402d could be either communicated via the master server or directly provided to the render server. In state 402d either the render service or the client may trigger the next state. For example, if the client has left the render service or application, item 408b, the master server could re-assign the lounge state 402c to the client and if the client has logged out, item 408c, the server could assign the log-in state 402b to the client.

Hence, the client will be redirected back to the master server after either the render service or the client itself requests to quit the application, item 408b. Then, the client need not to complete the exit, but is first redirected back to the master server, for example, in case the client/user wants to change to a different application and/or render service. The items 408b and 408c may be implemented according to the internal protocol.

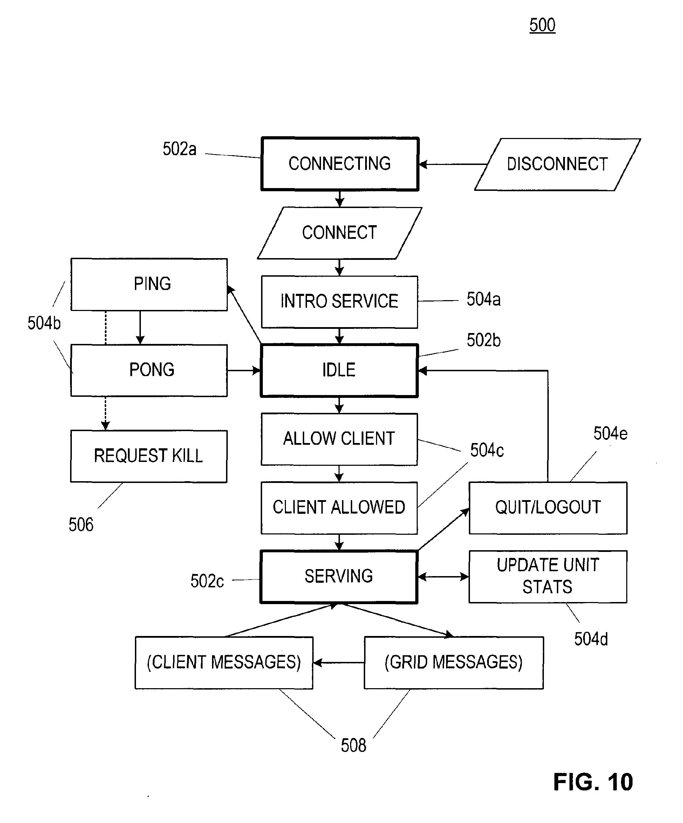

Fig. 10 shows a flow chart of a message flow applied in an architecture according to embodiments of the present disclosure. The flow chart 500 may detail a communication between a master server and render service, for example the master server 104 and the render servers of the grid 102 discussed with regard to Fig. 1. The render service can be assigned a connecting state 502a, an idle state 502b, and a serving state 502c. A disconnected render service will receive the connecting state 502a and may attempt to connect to the master server. After connection to the master server, the render server will initially introduce its capabilities to the master server in item 504a and will, thereafter, be assigned the idle state 502b.

An idle render service will be offered to clients for message forwarding. The master server may regularly check all render services for reactivity, as indicated in item 504b. In case of inactivity, the master server may ask an observer module or an observer application to restart the service in item 506. Item 506 can be implemented according to the observer protocol as discussed with regard to Fig. 2. Other items of the flow chart 500 may be implemented according to the internal protocol as discussed with regard to Fig. 2.

If a client desires to connect to a render service, the master server may send a request to the render service and if the client is allowed by the render service in item 504c, the client will be forwarded to the render service and messages will be handled by the render service directly. Thereafter, the render service will be assigned the serving state 502c. In the serving state 502c, the render service will receive messages from the master server and will handle client messages in states 508. Furthermore, the render service may hand back statistics to the master server in item 504d and may report back to the master server a quit or log-out of the client in item 504e.

In the flow chart 500, items 504a, ..., 504e can be implemented according to the internal protocol, item 506 can be implemented based on the observer protocol, and items 508 can be implemented using the interface protocol as discussed with regard to Fig. 2.

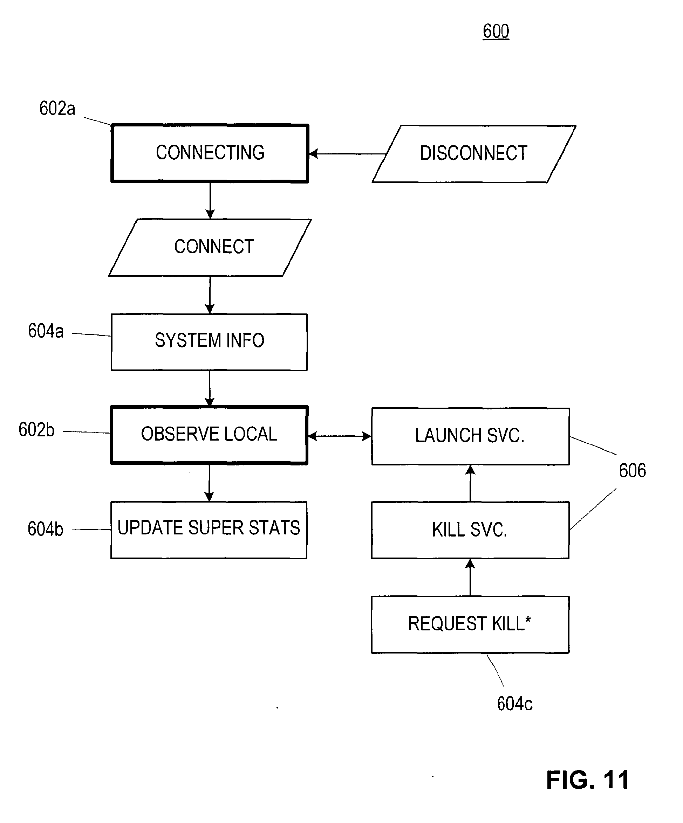

Fig. 11 discloses a further flow chart of a message flow of an architecture of an embodiment of the present disclosure. The flow chart 600 illustrates the message flow between a master server and an observer module, such as the master server 104 and the observer module for controlling the grid 102, as discussed with regard to Fig. 1. The observer module may be assigned a "connecting" state 602a and an "observe local" state 602b. A disconnected observer module may be assigned the connecting state 602a and may try to connect to the master server. Thereafter, the master server may receive system information in item 604a and the observer module may be assigned the observe local state 602b. The observer module may send system statistics to the master server in item 604b and make sure to launch a defined set of applications providing render services on a local machine. On command by the master server in item 604c, the observer module may kill an application or render service and re-launch it thereafter in items 606. Accordingly, the observer module may guarantee that a defined set of services stays up and is running.

In Fig. 11, item 604a, ..., 604c may be implemented according to the observer protocol as discussed with regard to Fig. 2.

Some portions of the detailed description have been presented in terms of algorithms and/or symbolic representations of operations on data bits within a computer memory, such as the message flow charts in Figs. 4 to 6. These algorithmic descriptions and/or representations are the means employed by those skilled in the art to most effectively describe processes to other equally skilled. An algorithm is here, generally, conceived to be a self-consistent sequence of acts leading to a desired result. The acts are those requiring physical manipulations of physical quantities, such as electrical and/or magnetic signals. Conveniently, these physical quantities and signals are referred to as bits, values, elements, symbols, characters, terms, numbers, or the like. Unless specifically stated otherwise, it is appreciated that throughout the disclosure, discussions utilizing terms such as processing, computing, determining and/or displaying, and the like, refer to processes of computer devices that manipulate and/or transform data represented as physical quantities within the computer devices.

The inventive system and method provides an interactive flexible presentation of large and complex data sets in a virtual store, which is enabled by a network-based rendering service. The approaches are also delivering visual presentations of a very high rendering quality, which does not require dedicated processing and rendering hardware on clients to enable the rendering and which is capable of rendering highly complex and voluminous data sets in an interactive and dynamic flexible fashion.

While some embodiments have been described in detail, it is to be understood that the aspect of the disclosure can take many forms. In particular, the claimed subject matter may be practiced or implemented differently from the examples described and the described features and characteristics may be practiced or implemented in any combination. The embodiments shown herein are intended to illustrate rather than to limit the invention as defined by the claims.

## Claims

1. A computer-implemented method for providing a virtual store in an interactive simulation environment based on a network-based render service, the method comprising:
executing one or more applications on one or more processing devices, each processing device providing a render service configured to render output of at least one application executed on the processing device;
providing data from one or more databases, said data to be processed by the one or
more applications, wherein the one or more applications are configured to process the data, to assemble at least some of the processed data in a virtual store, and to provide as output an interactive representation of the virtual store;
receiving an access request from a client of one or more clients, the access request identifying one of the one or more applications;
establishing a direct connection between the processing device executing the identified application and the client;
providing, by the render service of the processing device, the rendered output of the identified application to the client via the direct connection as an interactive simulation environment including the interactive representation of the virtual store; and
receiving, by the application, input data from the client via the direct connection indicative of an update of the virtual store.

2. The method according to claim 1, further comprising managing, by a master server, one or more clients, forwarding a client sending an access request to the processing device executing the identified application, and redirecting the client back to the master server if the client quits the application.

3. The method according claim 1 or 2, further comprising storing the processed data in a temporary storage on the processing device according to one or more versions, automatically redirecting the applications to at least one version of the processed data, managing by one of the applications the temporary storage, and committing by the one of the applications a version of the processed data to a respective database.

4. The method according to one of the preceding claims, further comprising monitoring, by at least one supervisor component, operating conditions of the one or more processing devices and assigning, by the at least one supervisor component, the one or more applications to at least one of the one or more processing devices.

5. The method according to one of the preceding claims, further comprising providing the same rendered output of an application to multiple clients connected to the application, and registering the multiple clients as participants of a video conference.

6. The method according to one of the preceding claims, further comprising rendering a video stream reflecting the output of the application into the rendered output.

7. The method according to claim 6, further comprising variably encoding the rendered video stream based on an available bandwidth of the direct connection.

8. A computer-readable medium having instructions stored thereon, wherein said instructions, in response to execution by a computing device, cause said computing device to automatically perform a method according to one of the preceding claims.

9. A network-based system comprising:
one or more processing devices configured to execute one or more applications, each processing device providing a render service configured to render output of at least one application executed on the processing device;
one or more databases coupled to the one or more processing devices and configured to provide data to be processed by the one or more applications, wherein the one or
more applications are configured to process the data, to assemble at least some of the processed data in a virtual store, and to provide as output an interactive representation of the virtual store; and
a master server configured to receive an access request from a client of one or more clients, the access request identifying one of the one or more applications and to establish a direct connection between a processing device executing the identified application and the client, wherein the rendered output of the identified application is provided to the client via the direct connection as an interactive simulation environment including the interactive representation of the virtual store, wherein the application is configured to receive input data from the client via the direct connection indicative of an update of the virtual store.

10. The system according to claim 9, further comprising at least one supervisor component configured to monitor operating conditions of the one or more processing devices.

11. The system according to claim 9 or 10, wherein the at least one supervisor component is further configured to assign the one or more applications to at least one of the one or more processing devices.

12. The system according to one of the claims 9 to 11, further comprising a database interface coupled to the one or more processing devices and configured to provide a unified access to the one or more databases.

13. The system according to one of the claims 9 to 12, wherein the render service includes a real-time graphics engine configured to generate the rendered output responsive to the at least one application.

14. The system according to one of the claims 9 to 13, wherein the one or more processing devices are set-up as a cluster controlled by the master server.

15. A processing device comprising:
a memory storing instructions encoding at least one application;
a processing unit configured to execute the at least one application, and to provide a render service configured to render output of the at least one executed application;
communication means configured to connect the processing device to one or more databases providing data to be processed by the at least one application, wherein the one or more applications are configured to process the data, to assemble at least some of the data in a virtual store, and to provide as output an interactive representation of the virtual store, wherein the processing unit is further configured to connect the processing device with a master server configured to manage access to the one or
more databases;
a display device configured to display the rendered output as an interactive simulation environment including the interactive representation of the virtual store; and
input means providing input data to the application indicative of an update of the virtual store.
